# EUROPÄISCHE PATENTSCHRIFT

(11) **EP 4 030 008 B1**
(45) Veröffentlichungstag und Bekanntmachung des Hinweises auf die Patenterteilung: **25.10.2023**
(21) Anmeldenummer: 22151719.6
(22) Anmeldetag: 17.01.2022
(51) Int. Cl.: E03D 5/02, E03D 5/10

(54) **TOILETTEN-SPÜLVORRICHTUNG MIT KOMBINIERTER MANUELLER UND SENSORISCHER BETÄTIGUNG**
TOILET FLUSHING SYSTEM WITH COMBINED MANUAL AND SENSOR-BASED ACTUATION
SYSTÈME DE CHASSE DE TOILETTES AVEC ACTIONNEMENT COMBINÉ MANUEL ET PAR CAPTEUR

(30) Priorität: 18.01.2021 CN 202120130067 U
(43) Veröffentlichungstag der Anmeldung: 20.07.2022
(73) Patentinhaber: Oceanwell (Xiamen) Industrial Co., Ltd., Xiamen, Fujian (CN)
(72) Erfinder: Chen, Ganming, Dongfu Town Haican Dist., Xiamen (CN); Peng, Dong, Dongfu Town Haican Dist., Xiamen (CN); Yu, Xingyi, Dongfu Town Haican Dist., Xiamen (CN)
(74) Vertreter: Rätsch, Caroline

(56) Entgegenhaltungen:
- EP-B1- 1 135 559
- CN-B- 108 331 112

## Beschreibung

### Technisches Gebiet

Die Erfindung betrifft eine Toiletten-Spülvorrichtung mit kombinierter manueller und sensorischer Betätigung.

### Stand der Technik

Bei Toiletten-Wasserauslassventilen kann nach dem Anheben des Hebels die Wasserauslassöffnung des Wasserkastens geöffnet werden, um den Wasserauslass zu bewirken. Bei früheren herkömmlichen Toiletten erfolgte die unmittelbare Verwendung einer Taste, um den Hebel zu betätigen. Erst später kamen nach und nach Konstruktionen auf, die eine Luftsackausdehnung zum Anheben des Hebels nutzten. Die Luftsackausdehnung wird durch eine manuelle Betätigung eines Zylinderkolbens oder durch eine manuelle Kompression eines Luftsacks bewirkt. Gleichermaßen möglich ist das sensorische Aufpumpen durch eine Luftpumpe, wobei die Luftpumpe durch eine Steuerungsvorrichtung angetrieben wird. Wenn die Sensorvorrichtung ein Körpersignal erfasst, gibt die Steuerungsvorrichtung einen Befehl an die Luftpumpe aus und die Luftpumpe aktiviert das Aufpumpen, so dass der sensorische Wasserauslass bewirkt wird.

Zur Vermeidung der Betriebsunfähigkeit der Luftpumpe bei Stromunterbrechung sind einige Toiletten zugleich mit einem manuellen Aufpumpmechanismus ausgestattet. Normalerweise ist es allerdings so, dass wenn der Nutzer eine manuelle Betätigung zur Durchführung des Spülens vornehmen möchte, die Sensorvorrichtung bei der Betätigung des manuellen Aufpumpmechanismus durch den Finger ein Körpersignal erfasst, so dass die Steuerungsvorrichtung die Luftpumpe aktiviert. Dies bedeutet, dass bei der manuellen Betätigung des Spülens eine unbeabsichtigte Auslösung des sensorischen Spülens erfolgt, was eine Vergeudung von Wasserressourcen bedeutet.

Aus CN108331112B und EP1135559B sind pneumatische Betätigungsvorrichtungen zum Betätigen eines Spülventils bekannt.

### Inhalt der Erfindung

Die Erfindung schafft eine Toiletten-Spülvorrichtung mit kombinierter manueller und sensorischer Betätigung, welche die beim Stand der Technik vorhandenen Mängel überwindet.

Die Erfindung löst das zugrundeliegende technische Problem durch die folgende technische Konzeption:
Die Toiletten-Spülvorrichtung mit kombinierter manueller und sensorischer Betätigung umfasst eine Körpersignal-Empfangsvorrichtung, eine PCB-Steuerungsvorrichtung sowie eine Luftpumpe zum Aufpumpen eines Luftsacks zur Aktivierung eines Wasserauslassventils, wobei die Körpersignal-Empfangsvorrichtung mit der PCB-Steuerungsvorrichtung kommunikativ verbunden ist, und wobei die PCB-Steuerungsvorrichtung mit der vorstehend bezeichneten Luftpumpe in Steuerverbindung steht. Ferner ist ein manueller Aufpumpmechanismus zum Aufpumpen des Luftsacks zur Aktivierung des Wasserauslassventils vorgesehen, wobei der manuelle Aufpumpmechanismus eine Taste und eine Rückstelleinrichtung umfasst, wobei die Taste beweglich an einer Halterung montiert ist, und wobei die Rückstelleinrichtung zwischen der Taste und der Halterung eingespannt ist. Ferner sind ein Magnet und ein Hall-Sensor umfasst, wobei sich der Magnet und die Taste synchron bewegen, wobei der Hall-Sensor mit der Halterung verbunden ist, und wobei der Hall-Sensor mit der PCB-Steuerungsvorrichtung kommunikativ verbunden ist. Zum manuellen Spülen wird die Taste niedergedrückt, wobei der manuelle Aufpumpmechanismus das Aufpumpen des Luftsacks zur Aktivierung des Wasserauslassventils bewirkt, um das manuelle Spülen zur Verfügung zu stellen, wobei sich der Magnet gemeinsam mit der Taste derart bewegt, dass eine signifikante Veränderung des Magnetfelds in der Umgebung des Hall-Sensors bewirkt wird, wobei der Hall-Sensor das Signal der signifikanten Veränderung des Magnetfelds an die PCB-Steuerungsvorrichtung übermittelt, und wobei die PCB-Steuerungsvorrichtung ein manuelles Spülen identifiziert und die Luftpumpe nicht aktiviert. Für das sensorische Spülen empfängt die Körpersignal-Empfangsvorrichtung ein Körpersignal und die Position des vorstehend bezeichneten Magneten bleibt unverändert, so dass keine signifikante Veränderung des Magnetfelds in der Umgebung des Hall-Sensors erfolgt, wobei der Hall-Sensor das Signal der nicht erfolgten signifikanten Veränderung des Magnetfelds an die PCB-Steuerungsvorrichtung übermittelt, und wobei die PCB-Steuerungsvorrichtung das sensorische Spülen identifiziert und die Luftpumpe zur Durchführung des sensorischen Spülens aktiviert.

Im Vergleich zum Stand der Technik bietet die vorliegende technische Konzeption die folgenden Vorteile:

Bei der Durchführung des Spülens mit manueller Betätigung bewegt sich der Magnet gemeinsam mit der Taste, was eine Veränderung des Abstands zwischen dem Magneten und dem Hall-Sensor bewirkt, so dass eine signifikante Veränderung der Magnetfeldstärke in der Umgebung des Hall-Sensors bewirkt wird und die PCB-Steuerungsvorrichtung im Falle des Erhalts der Information der signifikanten Veränderung des Magnetfelds das manuelle Spülen identifiziert und selbst im Falle der Signalmessung durch die Körpersignal-Empfangsvorrichtung keine Aktivierung der Luftpumpe erfolgt. Falls die Körpersignal-Empfangsvorrichtung ein Körpersignal empfängt, ohne dass jedoch eine signifikante Veränderung der Magnetfeldstärke in der Umgebung des Hall-Sensors erfolgt, empfängt die PCB-Steuerungsvorrichtung den Befehl ohne Veränderung der Tastenbetätigung und identifiziert das sensorische Spülen, um die Luftpumpe zur Durchführung des sensorischen Spülens zu aktivieren. Bei der vorliegenden Vorrichtung wird über den Hall-Sensor gemessen, ob eine Bewegung des Magneten vorliegt oder nicht, um zu beurteilen, ob die Taste niedergedrückt ist oder nicht, was die exakte Identifizierung von manuellem Spülen oder sensorischem Spülen ermöglicht, wobei vermieden werden kann, dass während der manuellen Spülbetätigung die Körpersignal-Empfangsvorrichtung unbeabsichtigt auslöst.

### Figurenbeschreibung

Im Folgenden wird die Erfindung anhand eines bevorzugten Ausführungsbeispiels im Zusammenhang mit der anhängenden Zeichnung näher erläutert.
Figur 1 zeigt die Toiletten-Spülvorrichtung mit kombinierter manueller und sensorischer Betätigung.
Figur 2 zeigt eine Vergrößerung des eingekreisten Bereichs aus Figur 1.

### Ausführungsbeispiel

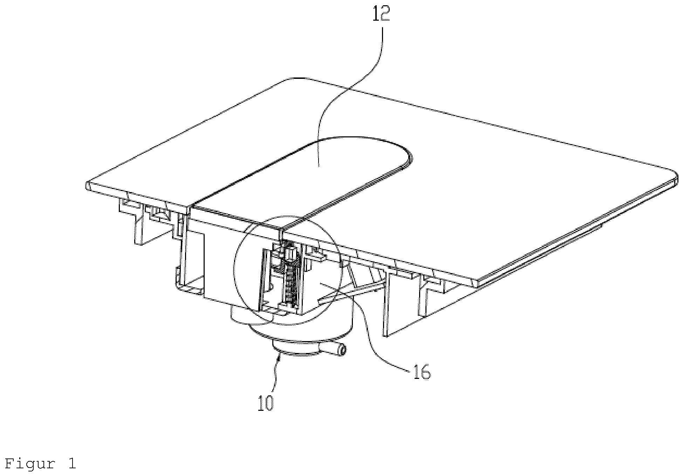

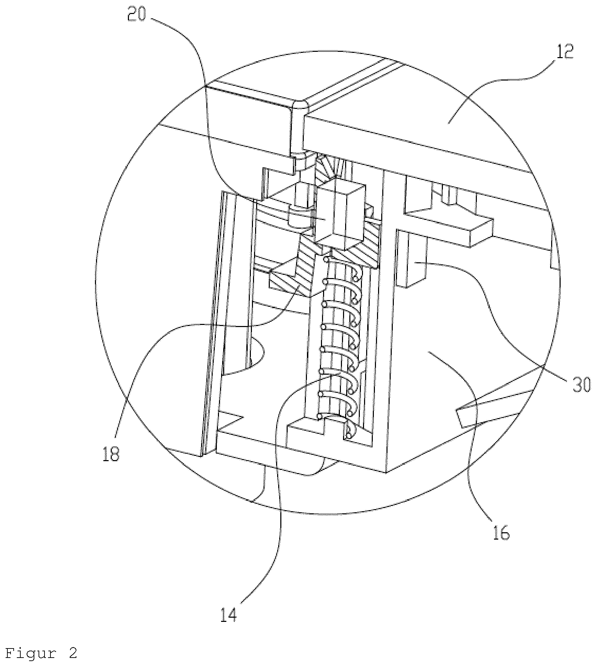

Die in Figur 1 und Figur 2 gezeigte Toiletten-Spülvorrichtung mit kombinierter manueller und sensorischer Betätigung umfasst eine Körpersignal-Empfangsvorrichtung, eine PCB-Steuerungsvorrichtung sowie eine Luftpumpe zum Aufpumpen eines Luftsacks zur Aktivierung eines Wasserauslassventils, wobei die Körpersignal-Empfangsvorrichtung mit der PCB-Steuerungsvorrichtung kommunikativ verbunden ist, und wobei die PCB-Steuerungsvorrichtung mit der vorstehend bezeichneten Luftpumpe in Steuerverbindung steht. Bei dem Luftsack zur Aktivierung des Wasserauslassventils handelt es sich um eine Konstruktion nach dem Stand der Technik. Nach einer Ausdehnung des Luftsacks zur Aktivierung des Wasserauslassventils kann das Wasserauslassventil zum Auslass des Wassers geöffnet werden. Nach dem Empfang eines Körpersignals durch die Körpersignal-Empfangsvorrichtung wird das Signal an die PCB-Steuerungsvorrichtung übermittelt und die PCB-Steuerungsvorrichtung entscheidet nach dem Empfang des Signals gemäß den tatsächlichen Umständen, ob eine Aktivierung der Luftpumpe zum Aufpumpen erforderlich ist oder nicht.

Die Toiletten-Spülvorrichtung mit kombinierter manueller und sensorischer Betätigung umfasst ferner einen manuellen Aufpumpmechanismus 10 zum Aufpumpen des Luftsacks zur Aktivierung des Wasserauslassventils, wobei der manuelle Aufpumpmechanismus 10 eine Taste 12 und eine Rückstelleinrichtung 14 umfasst, wobei die Taste 12 beweglich an einer Halterung 16 montiert ist, wobei die Rückstelleinrichtung 14 zwischen der Taste und der Halterung eingespannt ist, und wobei nach einem Niederdrücken der Taste 12 und Loslassen der Hand die Rückstelleinrichtung 14 eine Rückstellung der Taste bewirkt.

Bei der Halterung 16 kann es sich um den Toilettenkörper selbst handeln. Die Toiletten-Spülvorrichtung mit kombinierter manueller und sensorischer Betätigung umfasst ferner einen Magneten 20 und einen Hall-Sensor 30, wobei sich der Magnet 20 und die Taste 12 synchron bewegen, wobei der Hall-Sensor 30 mit der Halterung 16 verbunden ist, und wobei der Hall-Sensor 30 mit der PCB-Steuerungsvorrichtung kommunikativ verbunden ist. Der Hall-Sensor 30 kann das durch den Magneten 20 erzeugte Magnetfeld erfassen und ein Signal an die PCB-Steuerungsvorrichtung senden, wobei die PCB-Steuerungsvorrichtung je nachdem, ob eine Veränderung des Magnetfelds vorliegt oder nicht, feststellt, ob eine Bewegung von Magnet 20 und Taste 12 erfolgt. Falls eine signifikante Veränderung des Magnetfelds erfolgt, zeigt dies, dass die Taste 12 niedergedrückt ist, was einer manuellen Betätigung zum Spülen entspricht. In diesem Fall sendet die PCB-Steuerungsvorrichtung einen Befehl zur Nichtbetätigung der Luftpumpe. Falls andersherum keine signifikante Veränderung des Magnetfelds erfolgt, zeigt dies, dass die Taste 12 nicht niedergedrückt ist, was der sensorischen Betätigung zum Spülen entspricht. In diesem Fall sendet die PCB-Steuerungsvorrichtung einen Befehl zur Aktivierung der Luftpumpe. Es versteht sich, dass die Feststellung, ob eine Veränderung des Magnetfelds erfolgt oder nicht, hauptsächlich auf den Auswirkungen durch den menschlichen Körper basiert. Bei Annäherung des menschlichen Körpers erfährt das Magnetfeld kleinste Veränderungen, was entsprechend bedeutet, dass erst die Bewegung des Magneten zu signifikanten Veränderungen des Magnetfelds in der Umgebung des Hall-Sensors führt.

Im Falle der manuellen Betätigung des Spülens drückt der Nutzer die Taste 12 nieder und der manuelle Aufpumpmechanismus 10 bewirkt das Aufpumpen des Luftsacks zur Aktivierung des Wasserauslassventils, um das manuelle Spülen zur Verfügung zu stellen. Gleichzeitig bewegt sich der Magnet 20 gemeinsam mit der Taste 12, was eine signifikante Veränderung des Magnetfelds in der Umgebung des Hall-Sensors 30 bewirkt, so dass der Hall-Sensor ein Signal der erfolgten signifikanten Veränderung des Magnetfelds an die PCB-Steuerungsvorrichtung übermittelt, wobei die PCB-Steuerungsvorrichtung das manuelle Spülen identifiziert und die Luftpumpe nicht aktiviert wird.

Im Falle des sensorischen Spülens empfängt die Körpersignal-Empfangsvorrichtung ein Körpersignal, wobei die Position des vorstehend bezeichneten Magneten 20 unverändert bleibt, so dass keine signifikante Veränderung des Magnetfelds in der Umgebung des Hall-Sensors 30 erfolgt. Der Hall-Sensor übermittelt das Signal der nicht erfolgten signifikanten Veränderung des Magnetfelds an die PCB-Steuerungsvorrichtung, die ein sensorisches Spülen identifiziert, wobei die Luftpumpe zur Durchführung des sensorischen Spülens aktiviert wird.

Bevorzugt ist vorgesehen, dass der Magnet 20 mit der Taste 12 verbunden ist. Vorzugsweise ist der Magnet 20 im Ausgangszustand benachbart zu dem Hall-Sensor 30 angeordnet. Sobald der Hall-Sensor 30 eine signifikante Abschwächung des Magnetfeldsignals misst, zeigt dies, dass die Taste 12 niedergedrückt ist.

Bei dem vorliegenden Ausführungsbeispiel befindet sich der Hall-Sensor 30 an der Seite des Magneten 20.

Vorzugsweise handelt es sich bei der Rückstelleinrichtung 14 um eine Feder. Vorzugsweise ist ferner vorgesehen, dass der untere Teil der Taste 12 mit einem Führungsvorsprung 18 ausgebildet ist, der entlang einer Gleit-Ausnehmung der Halterung 16 gleitend beweglich ist, wobei der Magnet 20 mit dem Führungsvorsprung 18 verbunden ist.

Es versteht sich, dass der manuelle Aufpumpmechanismus 10 das Aufpumpen durch eine manuelle Betätigung vornimmt und das Aufpumpen des Luftsacks eine Aktivierung des Wasserauslassventils bewirkt. Es ist also eine Aufpumpkonstruktion mit einem Kolben möglich, wobei die Taste den Kolben bewegt und damit ein Aufpumpen bewirkt. Gleichermaßen ist eine Aufpumpkonstruktion mit einem Luftsack möglich, wobei die Taste den Luftsack komprimiert und ein Aufpumpen bewirkt.

Bei den beschriebenen Ausführungen handelt es sich lediglich um vorteilhafte Ausführungsbeispiele der vorliegenden Erfindung, ohne dass dies eine entsprechende Beschränkung des Schutzumfangs der vorliegenden Erfindung bedeutet.

## Patentansprüche

1. Toiletten-Spülvorrichtung umfassend eine Körpersignal-Empfangsvorrichtung, eine PCB-Steuerungsvorrichtung sowie eine Luftpumpe zum Aufpumpen eines Luftsacks zur Aktivierung des Wasserauslassventils, wobei die Körpersignal-Empfangsvorrichtung mit der PCB-Steuerungsvorrichtung kommunikativ verbunden ist, und wobei die PCB-Steuerungsvorrichtung mit der vorstehend bezeichneten Luftpumpe in Steuerverbindung steht, **dadurch gekennzeichnet, dass** die Toiletten-Spülvorrichtung eine kombinierte manuelle und sensorische Betätigung umfasst, wobei ein manueller Aufpumpmechanismus (10) zum Aufpumpen des Luftsacks zur Aktivierung des Wasserauslassventils vorgesehen ist, wobei der manuelle Aufpumpmechanismus eine Taste (12) und eine Rückstelleinrichtung (14) umfasst, wobei die Taste beweglich an einer Halterung (16) montiert ist, wobei die Rückstelleinrichtung zwischen der Taste und der Halterung eingespannt ist, wobei ein Magnet (20) und ein Hall-Sensor (30) umfasst sind, wobei sich der Magnet und die Taste synchron bewegen, wobei der Hall-Sensor mit der Halterung verbunden ist, wobei der Hall-Sensor mit der PCB-Steuerungsvorrichtung kommunikativ verbunden ist,
wobei zum manuellen Spülen die Taste niedergedrückt wird, wobei der manuelle Aufpumpmechanismus ein Aufpumpen des Luftsacks zur Aktivierung des Wasserauslassventils bewirkt, um das manuelle Spülen zur Verfügung zu stellen, wobei sich der Magnet gemeinsam mit der Taste derart bewegt, dass eine signifikante Veränderung des Magnetfelds in der Umgebung des Hall-Sensors bewirkt wird, wobei der Hall-Sensor das Signal der signifikanten Veränderung des Magnetfelds an die PCB-Steuerungsvorrichtung übermittelt, wobei die PCB-Steuerungsvorrichtung das manuelle Spülen identifiziert und die Luftpumpe nicht aktiviert wird,
wobei zum sensorischen Spülen die Körpersignal-Empfangsvorrichtung ein Körpersignal empfängt und die Position des Magneten unverändert bleibt, so dass keine signifikante Veränderung des Magnetfelds in der Umgebung des Hall-Sensors erfolgt, wobei der Hall-Sensor das Signal der nicht erfolgten signifikanten Veränderung des Magnetfelds an die PCB-Steuerungsvorrichtung übermittelt, und wobei die PCB-Steuerungsvorrichtung das sensorische Spülen identifiziert und die Luftpumpe zur Durchführung des sensorischen Spülens aktiviert wird.

2. Toiletten-Spülvorrichtung nach Anspruch 1, **dadurch gekennzeichnet, dass** der Magnet mit der Taste verbunden ist.

3. Toiletten-Spülvorrichtung nach Anspruch 2, **dadurch gekennzeichnet, dass** der Magnet im Ausgangszustand benachbart zu dem Hall-Sensor angeordnet ist.

4. Toiletten-Spülvorrichtung nach Anspruch 3, **dadurch gekennzeichnet, dass** der Hall-Sensor an der Seite des Magneten angeordnet ist.

5. Toiletten-Spülvorrichtung nach Anspruch 1, **dadurch gekennzeichnet, dass** es sich bei der Rückstelleinrichtung um eine Feder handelt.

6. Toiletten-Spülvorrichtung nach Anspruch 1 oder 5, **dadurch gekennzeichnet, dass** der untere Teil der Taste mit einem Führungsvorsprung verbunden ist, der entlang einer Gleit-Ausnehmung der Halterung gleitend beweglich ist, wobei der Magnet mit dem Führungsvorsprung verbunden ist.

7. Toiletten-Spülvorrichtung Anspruch 1, **dadurch gekennzeichnet, dass** es sich bei dem manuellen Aufpumpmechanismus um eine Aufpumpkonstruktion mit einem Kolben handelt, wobei die Taste den Kolben bewegt und damit ein Aufpumpen bewirkt.

8. Toiletten-Spülvorrichtung Anspruch 1, **dadurch gekennzeichnet, dass** es sich bei dem manuellen Aufpumpmechanismus um eine Aufpumpkonstruktion mit einem Luftsack handelt, wobei die Taste den Luftsack komprimiert und ein Aufpumpen bewirkt.

## Claims

1. Toilet flushing system
comprising a body-signal receiving device, a PCB control device and an air pump for inflating an airbag for activating the water outlet valve, wherein the body-signal receiving device has a communications connection to the PCB control device, and wherein the PCB control device has a control connection to the aforementioned air pump, **characterized in that** the toilet flushing system comprises combined manual and sensor-based actuation, wherein a manual inflation mechanism (10) for inflating the airbag for activating the water outlet valve is provided, wherein the manual inflation mechanism comprises a pushbutton (12) and a restoring device (14), wherein the pushbutton is movably mounted on a mounting (16), wherein the restoring device is clamped in between the pushbutton and the mounting, wherein a magnet (20) and a Hall sensor (30) are included, wherein the magnet and the pushbutton move synchronously, wherein the Hall sensor is connected to the mounting, wherein the Hall sensor has a communications connection to the PCB control device,
wherein, for manual flushing, the pushbutton is pressed down, wherein the manual inflation mechanism effects inflation of the airbag for activating the water outlet valve in order to provide the manual flushing, wherein the magnet moves together with the pushbutton in such a way that a significant change in the magnetic field in the surroundings of the Hall sensor is effected, wherein the Hall sensor transmits the signal relating to the significant change in the magnetic field to the PCB control device, wherein the PCB control device identifies the manual flushing and the air pump is not activated, wherein, for sensor-based flushing, the body-signal receiving device receives a body signal and the position of the magnet remains unchanged, so that there is no significant change in the magnetic field in the surroundings of the Hall sensor, wherein the Hall sensor transmits the signal relating to the significant change in the magnetic field, which has not taken place, to the PCB control device, and wherein the PCB control device identifies the sensor-based flushing and the air pump is activated to carry out the sensor-based flushing.

2. Toilet flushing system according to Claim 1, **characterized in that** the magnet is connected to the pushbutton.

3. Toilet flushing system according to Claim 2, **characterized in that**, in the initial state, the magnet is arranged adjacent to the Hall sensor.

4. Toilet flushing system according to Claim 3, **characterized in that** the Hall sensor is arranged on the side of the magnet.

5. Toilet flushing system according to Claim 1, **characterized in that** the restoring device is a spring.

6. Toilet flushing system according to Claim 1 or 5, **characterized in that** the lower part of the pushbutton is connected to a guide projection, which is movable so as to slide along a sliding recess in the mounting, wherein the magnet is connected to the guide projection.

7. Toilet flushing system according to Claim 1, **characterized in that** the manual inflation mechanism is an inflation construction having a piston, wherein the pushbutton moves the piston and therefore effects inflation.

8. Toilet flushing system according to Claim 1, **characterized in that** the manual inflation mechanism is an inflation construction having an airbag, wherein the pushbutton compresses the airbag and effects inflation.

## Revendications

1. Arrangement de chasse de toilette, comprenant un arrangement de réception de signal corporel, un arrangement de commande à circuit imprimé ainsi qu'une pompe à air destinée à gonfler par pompage un coussin d'air en vue d'activer une vanne d'évacuation d'eau, l'arrangement de réception de signal corporel étant connecté de communication à l'arrangement de commande à circuit imprimé, et l'arrangement de commande à circuit imprimé se trouvant en liaison de commande avec la pompe à air ici désignée, **caractérisé en ce que** l'arrangement de chasse de toilette comporte un actionnement combiné manuel et sensoriel, un mécanisme de gonflage par pompage manuel (10) destiné à gonfler par pompage le coussin d'air en vue d'activer le vanne d'évacuation d'eau étant présent, le mécanisme de gonflage par pompage manuel comportant une touche (12) et un dispositif de rappel (14), la touche étant montée mobile sur un élément de maintien (16), le dispositif de rappel étant attelé entre la touche et l'élément de maintien, un aimant (20) et un capteur à effet Hall (30) étant inclus, l'aimant et la touche se déplaçant de manière synchrone, le capteur à effet Hall étant relié à l'élément de maintien, le capteur à effet Hall étant connecté en communication à l'arrangement de commande à circuit imprimé, la touche étant enfoncée pour une chasse manuelle, le mécanisme de gonflage par pompage manuel provoquant un gonflage par pompage du coussin d'air en vue d'activer le vanne d'évacuation d'eau afin de mettre à disposition la chasse manuelle, l'aimant se déplaçant conjointement avec la touche de telle sorte qu'une modification importante du champ magnétique dans l'environnement du capteur à effet Hall soit provoqué, le capteur à effet Hall communiquant le signal de la modification importante du champ magnétique à l'arrangement de commande à circuit imprimé, l'arrangement de commande à circuit imprimé identifiant la chasse manuelle et la pompe à air n'étant pas activée, en vue du rinçage sensoriel, l'arrangement de réception de signal corporel recevant un signal corporel et la position de l'aimant restant inchangée, de sorte qu'aucune modification importante du champ magnétique dans l'environnement du capteur à effet Hall n'ait lieu, le capteur à effet Hall communiquant le signal de la modification importante n'ayant pas eu lieu du champ magnétique à l'arrangement de commande à circuit imprimé et l'arrangement de commande à circuit imprimé identifiant la chasse sensorielle et la pompe à air étant activée par l'exécution de la chasse sensorielle.

2. Arrangement de chasse de toilette selon la revendication 1, **caractérisé en ce que** l'aimant est relié à la touche.

3. Arrangement de chasse de toilette selon la revendication 2, **caractérisé en ce que** l'aimant dans l'état initial est disposé adjacent au capteur à effet Hall.

4. Arrangement de chasse de toilette selon la revendication 3, **caractérisé en ce que** le capteur à effet Hall est disposé sur le côté de l'aimant.

5. Arrangement de chasse de toilette selon la revendication 1, **caractérisé en ce que** le dispositif de rappel est un ressort.

6. Arrangement de chasse de toilette selon la revendication 1 ou 5, **caractérisé en ce que** la partie inférieure de la touche est en liaison avec une partie saillante de guidage, laquelle est mobile en coulissement le long d'un creux de coulissement de l'élément de maintien, l'aimant étant relié à la partie saillante de guidage.

7. Arrangement de chasse de toilette selon la revendication 1, **caractérisé en ce que** le mécanisme de gonflage par pompage manuel est une construction de gonflage par pompage pourvue d'un piston, la touche déplaçant le piston et provoquant ainsi un gonflage par pompage.

8. Arrangement de chasse de toilette selon la revendication 1, **caractérisé en ce que** le mécanisme de gonflage par pompage manuel est une construction de gonflage par pompage pourvue d'un coussin d'air, la touche comprimant le coussin d'air et provoquant un gonflage par pompage.
